# FASCICULE DE BREVET EUROPEEN

(11) **EP 3 646 425 B1**
(45) Date de publication et mention de la délivrance du brevet: **31.03.2021**
(21) Numéro de dépôt: 18753219.7
(22) Date de dépôt: 18.06.2018
(51) Int. Cl.: H02G 1/04

(54) **DISPOSITIF ET PROCEDE DE BLOCAGE EN TENSION D'UN CABLE A L'AIDE D'UNE PINCE SERRE-CABLE**
VORRICHTUNG UND VERFAHREN ZUM GREIFEN EINES KABELS MITTELS EINER SPANNUNGSENTLASTUNGSKABELKLEMME
DEVICE AND METHOD FOR GRIPPING A CABLE BY MEANS OF A STRAIN RELIEF CABLE CLAMP

(30) Priorité: 30.06.2017 FR 1756186
(43) Date de publication de la demande: 06.05.2020
(73) Titulaire: RTE Réseau de Transport d'Electricité, 92073 Paris La Défense Cedex (FR)
(72) Inventeur: OHAYON, David, 13090 Aix en Provence (FR); LOPEZ, Stéphane, 78210 Saint-Cyr-l'École (FR)
(74) Mandataire: Bonnet, Michel
(86) Numéro de dépôt international: PCT/FR2018/051450
(87) Numéro de publication internationale: WO 2019/002718

(56) Documents cités:
- CA-A- 975 540
- CN-A- 102 832 570
- JP-A- 2002 078 165

## Description

La présente invention concerne un dispositif de blocage en tension d'un câble comportant une pince serre-câble. Elle concerne également un procédé correspondant.

Elle s'applique en particulier, mais pas uniquement, au domaine de la construction et de la maintenance de lignes de transmission d'électricité à haute tension dans lesquelles des câbles de transport d'énergie électrique sont montés sur des pylônes successifs. Certaines opérations nécessitent par exemple le déroulage d'un câble le long d'un trajet ponctué par plusieurs pylônes successifs, dont un premier pylône de début de déroulage et un dernier pylône de fin de déroulage. Pour ce type d'opération, les pylônes sont préalablement équipés de poulies de déroulage conçues spécialement pour le déroulage et l'installation de câble héliporté à l'aide d'une dérouleuse de câble embarquée sous hélicoptère. Généralement munies de bras de guidage en « V », elles permettent au pilote de l'hélicoptère de déposer en vol le câble sur la poulie de déroulage d'un pylône grâce aux bras de guidage puis de se diriger vers le pylône suivant, et ainsi de suite dans un sens prédéterminé de déroulage allant du premier au dernier pylône. Le câble ainsi déroulé et déposé de pylône en pylône par l'hélicoptère peut être directement le câble conducteur d'électricité à haute tension qui devra ensuite être définitivement fixé aux pylônes selon des normes de sécurité imposées. Mais plus souvent, il s'agit d'un câble provisoire généralement appelé « câblette », plus léger et de diamètre inférieur au câble définitif, à partir d'une extrémité duquel le câble conducteur d'électricité à haute tension sera dans un deuxième temps treuillé le long du trajet constitué par les pylônes successifs considérés. Différents types de pinces serre-câble et de mécanismes de blocage sont notamment divulgués dans les documents CN102832570A, CA975540A et JP2002078165A.

L'invention s'applique plus généralement à tout domaine dans lequel un câble, notamment à monter sur pylônes équipés de poulies de déroulage, doit être déroulé et installé quel que soit l'engin de déroulage utilisé (hélicoptère, grue mobile ou autres).

Dans tous les cas, une reprise d'effort en tension du câble est nécessaire en début de déroulage, au voisinage du premier pylône et dans le sens inverse du sens prédéterminé de déroulage, et en fin de déroulage, au voisinage du dernier pylône et dans le sens prédéterminé de déroulage. En effet, lorsque c'est le câble conducteur définitif qui est déroulé, la procédure de déroulage nécessite que celui-ci soit fixé au premier pylône une fois déposé sur la première poulie de déroulage pour que l'hélicoptère puisse poursuivre son opération et qu'il soit fixé également au dernier pylône une fois déposé sur la dernière poulie de déroulage pour libérer l'hélicoptère de toute tension dangereuse avant qu'il ne se pose au sol. Lorsque c'est un câble provisoire qui est déroulé, celui-ci doit de même pouvoir être bloqué temporairement en début et en fin de déroulage pour faciliter le raccordement du câble conducteur définitif et l'opération de treuillage : l'hélicoptère doit effectivement également pouvoir se poser en fin de déroulage du câble provisoire sans tension, tout comme l'exige l'opération de connexion du câble provisoire au câble conducteur définitif.

Dans ce contexte aux contraintes de sécurité difficiles, une procédure idéale de déroulage et d'installation de câble conducteur d'électricité à haute tension est privilégiée : elle prévoit le déroulage et l'installation provisoire d'une câblette, puis le treuillage du câble conducteur définitif. En ce qui concerne le déroulage lui-même, la procédure comporte huit phases : une première phase consiste à dérouler par hélicoptère une partie de la câblette, éventuellement équipée d'une masse à son extrémité libre afin de la stabiliser en amont du premier pylône dans le sens prédéterminé de déroulage, et à l'approcher du premier pylône ; la deuxième phase consiste à déposer par hélicoptère la câblette dans le réa de poulie de déroulage du premier pylône et à maintenir la câblette en tension dans le sens opposé du sens prédéterminé de déroulage ; la troisième phase consiste à poursuivre le déroulage et l'installation de la câblette sur poulies de déroulage de pylône en pylône jusqu'à l'avant-dernier pylône tout en maintenant une tension suffisante dans la câblette ; la quatrième phase consiste à approcher par hélicoptère la câblette du dernier pylône ; la cinquième phase consiste à déposer par hélicoptère la câblette dans le réa de poulie de déroulage du dernier pylône ; la sixième phase consiste à s'éloigner du dernier pylône et à bloquer la câblette en tension dans le sens prédéterminé de déroulage pour libérer l'hélicoptère ; la septième phase consiste à déposer la câblette au sol; la huitième phase consiste enfin à poser l'hélicoptère au sol.

Si l'on dispose de suffisamment de place en amont du premier pylône et en aval du dernier pylône, le maintien en tension de la câblette en début et en fin de déroulage peut se faire au sol. Cela permet d'éviter la présence d'opérateurs sur les premier et dernier pylônes lorsque l'hélicoptère déroule la câblette. Mais malheureusement, cette situation géographique idéale n'est pas toujours vérifiée.

En particulier, en fin de déroulage, le dernier pylône peut ne pas disposer de suffisamment de place en aval (relief, infrastructures, ...) pour permettre le maintien en tension précité. Dans ce cas, lors de l'exécution des cinquième et sixième phases, deux opérateurs doivent monter au sommet du dernier pylône : l'un pour échanger en permanence avec le pilote de l'hélicoptère qui maintient son appareil en vol stationnaire, l'autre pour bloquer le câble en tension sur le dernier pylône lorsqu'il est déposé dans le réa de poulie de déroulage, généralement à l'aide d'un manchon, d'une frette et d'un serre-câble ou d'une pince serre-câble à organe de traction.

Lorsque c'est le câble conducteur définitif qui est déroulé par l'hélicoptère, son extrémité libre à fixer sur le dernier pylône est généralement munie d'un manchon spécifique devant être raccordé à une chaîne d'isolateurs ou à la structure du pylône, ou d'une frette permettant une fixation du câble au pylône à l'aide d'un serre-câble. Lorsque c'est un câble provisoire qui est déroulé par l'hélicoptère, l'opérateur en charge du blocage de câble utilise généralement une pince serre-câble à mâchoires de serrage et à organe de traction. Une telle pince est conçue pour que ses mâchoires soient actionnées en serrage du câble par traction exercée sur une première extrémité de l'organe de traction dont une deuxième extrémité est mécaniquement liée en déplacement à au moins l'une des mâchoires. Ainsi, en fixant la première extrémité de l'organe de traction à la structure du dernier pylône, on bloque le câble et on maintient une tension dirigée dans le sens de déroulage de câble permettant au pilote de l'hélicoptère de poser le câble et l'hélicoptère au sol.

La proximité de l'hélicoptère rend cette opération de blocage en tension de câble particulièrement chronophage et risquée.

Il peut ainsi être souhaité de prévoir un dispositif de blocage en tension qui permette de s'affranchir d'au moins une partie des problèmes et contraintes précités.

Il est donc proposé un dispositif de blocage en tension d'un câble, comportant une pince serre-câble à mâchoires de serrage et à organe de traction, ladite pince étant conçue pour que ses mâchoires soient actionnées en serrage par traction exercée sur une première extrémité de l'organe de traction dont une deuxième extrémité est mécaniquement liée en déplacement à au moins l'une des mâchoires, comportant :
- un premier plateau de réception du câble,
- un deuxième plateau de réception du câble en liaison glissière avec le premier plateau, déplaçable entre une première position, maintenue par défaut à l'aide de moyens de rappel entre les premier et deuxième plateaux, et une deuxième position, maintenue par enclenchement d'un système de cran d'arrêt en mise sous tension des moyens de rappel,
et dans lequel :
- au moins l'une des mâchoires de la pince serre-câble est fixée à l'un des premier et deuxième plateaux tandis que la première extrémité de l'organe de traction est fixée à l'autre des premier et deuxième plateaux pour une disposition en resserrement des mâchoires dans la première position du deuxième plateau et une disposition en desserrement des mâchoires dans la deuxième position du deuxième plateau, et
- le système de cran d'arrêt est configuré pour être libéré par engagement du câble entre les mâchoires desserrées de la pince serre-câble.

Ainsi, aucune intervention humaine n'est nécessaire pour le blocage en tension d'un câble à déposer sur le dernier pylône d'une succession de pylônes sur lesquels doit être déroulé ce câble, puisque ce blocage est assuré automatiquement lorsque le câble est amené entre les mâchoires desserrées de la pince serre-câble par libération du système de cran d'arrêt. En outre l'automatisation du blocage permet d'accélérer significativement l'exécution des cinquième et sixième phases précitées, ce qui réduit le temps de vol de l'hélicoptère et permet une meilleure productivité. Celles-ci peuvent donc être réalisées rapidement et en toute sécurité.

De façon optionnelle, le premier plateau comporte au moins deux éléments en « V » de guidage du câble vers un axe longitudinal passant entre les deux mâchoires desserrées de la pince serre-câble.

De façon optionnelle également, le deuxième plateau comporte au moins deux éléments en « V » de guidage du câble jusqu'à son engagement entre les deux mâchoires desserrées de la pince serre-câble, les éléments de guidage en « V » du premier plateau étant configurés pour guider le câble au moins jusqu'à son engagement entre les éléments de guidage en « V » du deuxième plateau.

De façon optionnelle également, le système de cran d'arrêt comporte au moins un déclencheur fixé par une liaison pivot au deuxième plateau et présentant un doigt apte à s'étendre dans une fente aménagée dans le premier plateau, ce déclencheur étant apte à basculer, par pression du câble lors de son engagement entre les mâchoires desserrées de la pince serre-câble, d'une position de maintien du cran d'arrêt lorsque son doigt s'étend dans la fente du premier plateau à une position de libération du cran d'arrêt par sortie de son doigt de la fente du premier plateau.

De façon optionnelle également, la fente est aménagée dans un rail du premier plateau, le deuxième plateau étant monté en liaison glissière à l'aide de patins sur ce rail et les moyens de rappel étant fixés à une de leurs extrémités sur ce rail.

De façon optionnelle également, un dispositif de blocage selon l'invention peut comporter une fourche de fixation du premier plateau à un support.

De façon optionnelle également, un dispositif de blocage selon l'invention peut comporter un brin élastique fixé, à une première extrémité, au premier plateau ou à la fourche et muni, à une deuxième extrémité, d'un mousqueton à ouverture automatique sous chargement destiné à être raccordé au support.

De façon optionnelle également, un dispositif de blocage selon l'invention peut comporter une cordelette de libération dont une extrémité est fixée au deuxième plateau au lieu de fixation des moyens de rappel.

De façon optionnelle également, un dispositif de blocage selon l'invention peut en outre comporter un indicateur lumineux dont l'allumage est provoqué automatiquement suite à la libération du système de cran d'arrêt.

Il est également proposé un procédé de blocage en tension d'un câble à l'aide d'un dispositif de blocage selon l'invention, comportant les étapes suivantes :
- enclenchement du système de cran d'arrêt pour une mise en deuxième position du deuxième plateau,
- rapprochement du câble vers les premier et deuxième plateaux, jusqu'à engager le câble entre les mâchoires desserrées de la pince serre-câble, et
- libération du système de cran d'arrêt par placement du câble entre les mâchoires desserrées de la pince serre-câble, provoquant ainsi le resserrement des mâchoires sur le câble et son blocage en tension.

De façon optionnelle, un procédé de blocage selon l'invention peut comporter les étapes suivantes :
- placement d'une poulie de déroulage de câble sur une structure porteuse,
- fixation du premier plateau du dispositif de blocage à la poulie de déroulage de câble,
le rapprochement du câble vers les premier et deuxième plateaux, l'engagement du câble entre les mâchoires desserrées de la pince serre-câble et la libération du système de cran d'arrêt étant réalisés à l'aide d'un hélicoptère porteur du câble lors d'une opération de déroulage et de dépôt du câble sur un réa de la poulie de déroulage.

L'invention sera mieux comprise à l'aide de la description qui va suivre, donnée uniquement à titre d'exemple et faite en se référant aux dessins annexés dans lesquels :
- les figures 1 et 2 représentent schématiquement en perspective la structure générale d'un exemple de pince serre-câble pouvant être utilisée dans un dispositif de blocage selon l'invention, en disposition respectivement desserrée et resserrée de ses mâchoires,
- la figure 3 représente schématiquement en perspective la structure générale d'un dispositif de blocage en tension d'un câble selon un mode de réalisation de l'invention, comportant la pince serre-câble des figures 1 et 2,
- la figure 4 représente schématiquement en perspective une partie des éléments constitutifs du dispositif de blocage en tension de la figure 3,
- les figures 5 et 6 représentent schématiquement en perspective une autre partie des éléments constitutifs du dispositif de blocage en tension de la figure 3 selon deux dispositions différentes possibles,
- les figures 7 et 8 sont des vues partielles de dessus du dispositif de blocage de la figure 3, respectivement en positions resserrées et desserrées des mâchoires de sa pince serre-câble,
- la figure 9 illustre les étapes successives d'un procédé d'installation et de blocage en tension d'un câble sur une structure munie d'une poulie de déroulage, et
- les figures 10 et 11 représentent schématiquement une installation de déroulage de câble au cours de deux des étapes du procédé de la figure 9.

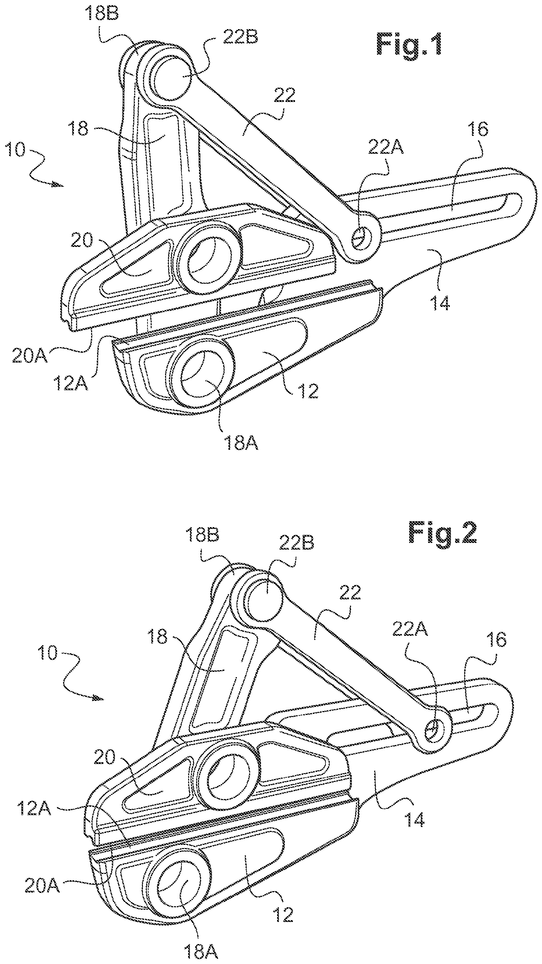

La pince serre-câble 10 représentée sur la figure 1 comporte une mâchoire de serrage inférieure 12 prolongée par un bras de guidage 14 dans lequel est aménagé un trou traversant oblong 16. Elle comporte en outre un bras de levier 18 dont une première extrémité 18A est fixée en liaison pivot à la mâchoire de serrage inférieure 12. Elle comporte en outre une mâchoire de serrage supérieure 20 fixée en liaison pivot sur une portion médiane du bras de levier 18. La mâchoire de serrage supérieure 20 présente une rainure 20A de maintien de câble faisant face à une rainure 12A correspondante de la mâchoire de serrage inférieure 12. La pince serre-câble 10 comporte enfin un organe de traction 22 à double bras, dont une première extrémité 22A, matérialisée par un premier arbre de raccordement du double bras, coulisse librement à l'intérieur du trou traversant oblong 16 et dont une deuxième extrémité 22B, matérialisée par un deuxième arbre de raccordement du double bras, est fixée en liaison pivot à une deuxième extrémité 18B du bras de levier 18.

Ainsi, par effet de levier, le coulissement de la première extrémité 22A de l'organe de traction 22 dans le trou traversant oblong 16 engendre un rapprochement ou un éloignement des deux mâchoires 12 et 20 selon le sens de coulissement. Plus précisément, lorsque l'on pousse la première extrémité 22A de l'organe de traction 22 vers une extrémité proximale (i.e. proche des deux mâchoires) du trou traversant oblong 16, cela engendre un redressement du bras de levier 18 et un desserrement des deux mâchoires 12 et 20. Au contraire, lorsque l'on tire la première extrémité 22A de l'organe de traction 22 vers une extrémité distale (i.e. éloignée des deux mâchoires) du trou traversant oblong 16, cela engendre un rabattement du bras de levier 18 et un resserrement des deux mâchoires 12 et 20.

La pince serre-câble 10 de la figure 1 est représentée en disposition desserrée de ses mâchoires 12 et 20, l'extrémité 22A de l'organe de traction 22 étant précisément positionnée à l'extrémité proximale du trou traversant oblong 16 du bras de guidage 14.

La même pince serre-câble 10 est représentée sur la figure 2 en disposition resserrée de ses mâchoires 12 et 20, l'extrémité 22A de l'organe de traction 22 étant déplacée vers l'extrémité distale du trou traversant oblong 16 du bras de guidage 14.

Une telle pince serre-câble 10 convient pour un dispositif de blocage selon la présente invention. Mais il ne s'agit que d'un exemple non limitatif. De multiples pinces serre-câble différentes peuvent aussi convenir. Il suffit qu'elles présentent les caractéristiques générales suivantes : des mâchoires de serrage et un organe de traction coopérant pour que les mâchoires soient actionnées en serrage par traction exercée sur une première extrémité de l'organe de traction dont une deuxième extrémité est mécaniquement liée en déplacement à au moins l'une des mâchoires.

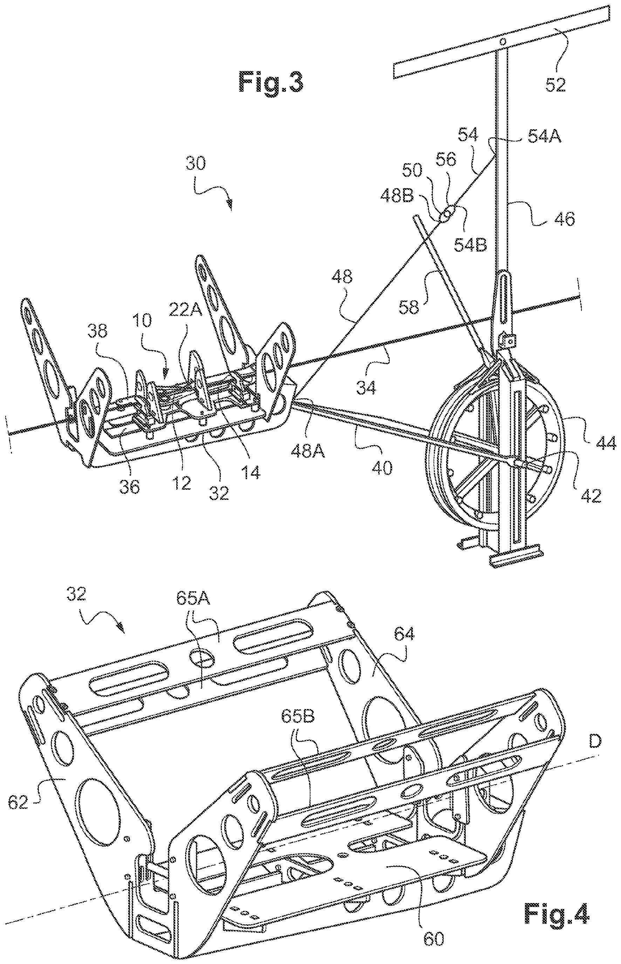

Le dispositif de blocage 30 illustré sur la figure 3 comporte :
- un premier plateau 32 de réception d'un câble 34, auquel est fixé longitudinalement un rail 36,
- un deuxième plateau 38 de réception du câble 34, ce deuxième plateau 38 étant en liaison glissière avec le premier plateau 32 le long du rail 36,
- la pince serre-câble 10 dont la mâchoire inférieure 12 et le bras de guidage 14 qui la prolonge sont fixés au deuxième plateau 38 tandis que la première extrémité 22A de son organe de traction 22 est fixée au premier plateau 32,
- une fourche 40 de fixation du premier plateau 32 à un support constitué d'un arbre de rotation 42 d'une poulie de déroulage 44 elle-même montée, par cet arbre de rotation 42, sur une structure porteuse 46, et
- un brin élastique 48 fixé, à une première extrémité 48A, au premier plateau 32 ou à la fourche 40 et muni, à une deuxième extrémité 48B, d'un mousqueton 50 à ouverture automatique sous chargement.

La structure porteuse 46 est par exemple un bras de balancier fixé libre en rotation sur une poutre 52 d'un pylône d'un réseau de transport d'électricité à haute tension par câble. La poulie de déroulage 44 est fixée en partie basse du bras de balancier 46 qui est suspendu à la poutre 52 par son extrémité haute.

Un brin de raccordement 54 est fixé, à une première extrémité 54A, au bras de balancier 46, par exemple au voisinage de son extrémité haute, et est muni, à une deuxième extrémité 54B, d'un anneau 56 de raccordement du mousqueton 50. Ainsi, le dispositif de blocage 30 est fixé, libre en rotation autour de l'arbre 42, par sa fourche 40 au bras de balancier 46 qui est lui-même en rotation libre sur la poutre 52, tout en étant rappelé élastiquement vers une position d'équilibre grâce au brin élastique 48 raccordé au brin 54 par coopération du mousqueton 50 et de l'anneau 56.

Un bras de guidage 58 est fixé de façon connue en soi au bras de balancier 46 pour guider la pose du câble 34 par hélicoptère jusque dans un réa de la poulie de déroulage 44. Les premier et deuxième plateaux 32, 38 du dispositif de blocage 30 sont eux-mêmes disposés longitudinalement à l'aide de la fourche 40 pour recevoir le câble 34 lors de cette opération de pose.

Le premier plateau 32 est représenté en perspective vue de dessus sans son rail 36 sur la figure 4. Il comporte une base 60 s'étendant selon une forme principalement rectangulaire parallèlement à un axe longitudinal D situé dans un plan vertical (selon la disposition de la figure 4) de symétrie du premier plateau 32. Cet axe longitudinal D est destiné à passer entre les deux mâchoires 12 et 20 de la pince serre-câble 10 lorsque le dispositif de blocage 30 est complètement monté.

Le premier plateau 32 comporte en outre deux éléments en « V » 62 et 64 de guidage du câble 34 vers l'axe longitudinal D. Ces deux éléments en « V » 62, 64 s'étendent respectivement transversalement vers le haut et symétriquement de part et d'autre du plan vertical contenant l'axe longitudinal D aux deux extrémités longitudinales de la base 60. Chacun de ces deux éléments en « V » 62, 64 est constitué d'une paire de bras symétriques reproduisant la forme du « V ».

De façon optionnelle représentée uniquement sur la figure 4, deux paires de barres latérales de renfort 65A et 65B relient longitudinalement respectivement les extrémités latérales situées d'un même côté du plan vertical contenant l'axe longitudinal D des deux éléments en « V » 62, 64. Ainsi, une première paire de barres latérales de renfort 65A relie longitudinalement les extrémités latérales des éléments en « V » 62, 64 situées derrière le plan vertical précité selon la représentation de la figure 4. De même, une deuxième paire de barres latérales de renfort 65B relie longitudinalement les extrémités latérales des éléments en « V » 62, 64 situées devant le plan vertical précité selon la représentation de la figure 4. De telles barres latérales 65A, 65B remplissent non seulement une fonction évidente de renforcement de l'ensemble, mais en outre une fonction d'amélioration du guidage du câble 34 vers l'axe longitudinal D.

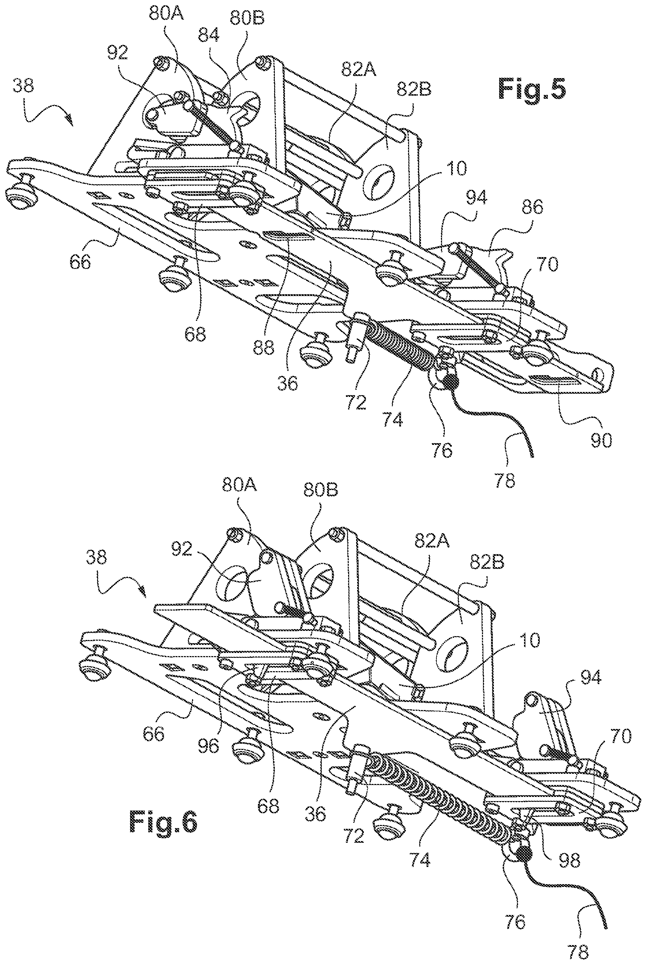

Le deuxième plateau 38 est représenté en perspective vue de dessous avec le rail 36 du premier plateau 32 sur la figure 5. Il comporte une base 66 sous laquelle sont fixés deux patins de guidage 68 et 70 coopérant avec le rail 36 pour assurer la liaison glissière entre les deux plateaux 32 et 38. Selon cette vue de dessous en perspective, on voit que le rail 36 est muni en partie centrale d'un pion 72 de fixation à la base 60 du premier plateau 32. Des moyens de rappel entre les premier et deuxième plateaux, ici un ressort 74, sont fixés d'une part au rail 36 et d'autre part au deuxième plateau 38. Plus précisément, dans l'exemple non limitatif de la figure 5, le ressort 74 est fixé par l'une de ses extrémités au pion de fixation 72 et par l'autre de ses extrémités à un anneau 76 lui-même fixé sous la base 66 du deuxième plateau 38. C'est à ce même anneau 76 qu'est en outre raccordée l'extrémité d'une cordelette 78 de libération du câble 34.

Le deuxième plateau 38 comporte en outre deux éléments en « V » de guidage du câble 34 jusque sur l'axe longitudinal D, c'est-à-dire jusqu'à son engagement entre les deux mâchoires 12 et 20 de la pince serre-câble 10 lorsque celles-ci sont desserrées. Le premier des deux éléments en « V » est constitué de deux organes saillants 80A et 80B fixés sur la base 66 du deuxième plateau 38 et présentant chacun une rampe d'amenée du câble 34 jusque sur l'axe D. Ces deux rampes forment ainsi un premier « V » de guidage du câble 34. Les deux organes saillants 80A, 80B sont en outre disposés symétriquement l'un de l'autre par rapport au plan vertical contenant l'axe longitudinal D. Le deuxième des deux éléments en « V » est constitué de deux autres organes saillants 82A et 82B fixés sur la base 66 du deuxième plateau 38 et présentant également chacun une rampe d'amenée du câble 34 jusque sur l'axe D. Ces deux rampes forment ainsi un deuxième « V » de guidage du câble 34. Dans l'exemple illustré, les deux organes saillants 82A, 82B sont en outre longitudinalement légèrement décalés, ce qui ne change rien à leur fonction de guidage. Pour solidifier l'ensemble, les organes saillants 80A et 82A situé du même côté du plan vertical contenant l'axe longitudinal D sont en outre reliés par des tiges vissées de renfort. Il en est de même pour les organes saillants 82A et 82B.

Les éléments de guidage en « V » 62 et 64 du premier plateau 32 coopèrent avec les éléments de guidage en « V » 80A, 80B et 82A, 82B du deuxième plateau 38 de la façon suivante : les éléments de guidage en « V » 62 et 64 guident le câble 34 d'une façon approximative vers l'axe longitudinal D, au moins jusqu'à son engagement entre les éléments de guidage en « V » 80A, 80B et 82A, 82B ; puis le guidage du câble 34 est plus précisément repris par ces derniers jusqu'à son engagement précis entre les deux mâchoires 12, 20 desserrées de la pince serre-câble 10.

Le deuxième plateau 38 comporte en outre un système de cran d'arrêt comportant deux déclencheurs 84 et 86 fixés par une liaison pivot au deuxième plateau 38. Ils coopèrent respectivement avec deux fentes 88 et 90 aménagées dans le rail 36. L'axe commun de pivot de ces deux déclencheurs 84, 86 est parallèle à l'axe longitudinal D mais légèrement décalé. En outre, chaque déclencheur 84 ou 86 présente, à une première extrémité, une tête pivotante 92 ou 94 qui s'étend au-dessus de l'axe longitudinal D de manière à traverser le plan vertical qui contient cet axe D. Chaque déclencheur 84 ou 86 présente en outre, à une deuxième extrémité, un doigt pivotant 96 ou 98 destiné à entrer ou sortir de la fente correspondante 88 ou 90 du rail 36 par pivotement.

Ainsi, lorsque le câble 34 est guidé par les éléments de guidage en « V » 62 et 64 du premier plateau 32, puis par les éléments de guidage en « V » 80A, 80B et 82A, 82B du deuxième plateau 38, vers l'axe longitudinal D lors de sa pose sur le réa de la poulie de déroulage 44, il vient selon son orientation successivement au contact des têtes pivotantes 92 et 94 et engage par pression leur pivotement vers l'axe longitudinal D de manière à relever les doigts pivotants 96 et 98 par basculement successif des déclencheurs 84 et 86. Cette opération libère le système de cran d'arrêt, par sortie des doigts 96 et 98 des fentes 88 et 90, et vient positionner le deuxième plateau 38 dans une première position représentée sur la figure 5, maintenue par défaut à l'aide du ressort 74 qui tend à rapprocher longitudinalement l'anneau 76 du pion 72.

Inversement, le système de cran d'arrêt peut être enclenché et maintenu en mettant le ressort 74 en tension, par exemple en tirant sur la cordelette de libération 78 jusqu'à ramener les doigts pivotants 96 et 98 respectivement face aux fentes 88 et 90 par coulissement des patins de guidage 68 et 70 le long du rail 36. Des moyens de rappel tels que des ressorts peuvent être prévus entre les deux déclencheurs 84 et 86 et le deuxième plateau 38 pour ramener par défaut les doigts pivotants 96 et 98 vers leur position d'insertion dans les fentes 88 et 90 pour un enclenchement et un maintien du système de cran d'arrêt dès lors qu'ils sont face à elles. Cela n'est en outre possible que lorsque le câble 34 n'agit pas en pression contre les têtes 92 et 94, de sorte que ces dernières sont avantageusement configurées pour être libérées de la pression du câble 34 lorsque celui-ci est complètement engagé sur l'axe longitudinal D entre les deux mâchoires 12 et 20 de la pince serre-câble 10. Cette opération d'enclenchement du système de cran d'arrêt vient positionner le deuxième plateau 38 dans une deuxième position représentée sur la figure 6, maintenue par insertion des pieds 96 et 98 dans les fentes 88 et 90 en mise sous tension du ressort 74.

On notera que selon les illustrations des figures 5 et 6, les déclencheurs 84 et 86 sont disposés et fixés sur les patins de guidage 68 et 70, ceux-ci présentant alors des fentes permettant le passage des pieds 96 et 98 pour leur insertion dans les fentes 88 et 90. Ce n'est pas une nécessité mais cette disposition est avantageuse en termes d'optimisation de l'espace disponible.

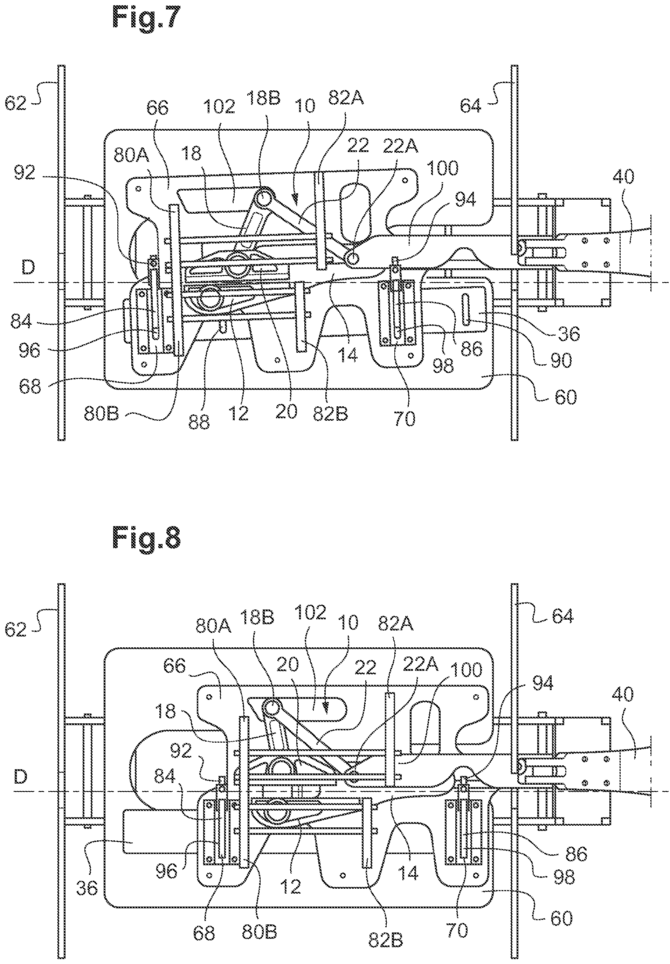

La figure 7 illustre partiellement le dispositif de blocage 30, c'est-à-dire avec une représentation partielle de sa fourche 40 et sans le brin élastique 48, en vue de dessus lorsque le deuxième plateau 38 est dans sa première position maintenue par défaut par le ressort 74 (non visible sur la figure 7 car situé sous la base 66), c'est-à-dire dans sa position telle qu'illustrée sur la figure 5.

Sur cette vue, la pince serre-câble 10 est clairement visible. Sa mâchoire de serrage inférieure 12 et son bras de guidage 14 sont fixés sur la base 66 du deuxième plateau 38. La première extrémité 22A de son organe de traction 22 est fixée, libre en rotation, à l'extrémité d'un bras de maintien 100 lui-même solidaire du premier plateau 32. Dans cette première position où le deuxième plateau 38 est maintenu vers la gauche dans le plan de la figure 7, la première extrémité 22A de l'organe de traction 22 est placée à l'extrémité distale du trou traversant oblong 16, le bras de levier 18 est rabattu et les mâchoires de serrage 12, 20 sont resserrées l'une contre l'autre.

On notera qu'une lumière 102 est aménagée dans la base 66 du deuxième plateau 38 pour permettre un mouvement de came de la deuxième extrémité 18B du bras de levier 18. Elle remplit en outre une autre fonction avantageuse visible sur la figure 7. Par un effet de coin résultant d'une coopération entre la deuxième extrémité 18B du bras de levier 18 et les bords de cette lumière 102, le rabattement du bras de levier 18 en resserrement des mâchoires 12 et 20 impose une légère rotation de la base 66, et de tous les autres éléments liés en rotation à cette base 66 tels que le rail 36, les patins 68, 70, la mâchoire inférieure 12 et le bras de guidage 14, les éléments de guidage en « V » 80A, 80B et 82A, 82B, etc., autour du pion 72 dans le sens anti-horaire. Il en résulte que lorsque les mâchoires 12 et 20 sont resserrées sur le câble 34 qui s'étend le long de l'axe longitudinal D, elles sont également légèrement inclinées par rapport à cet axe de manière à tordre localement le câble 34 pour une meilleure prise.

La figure 8 diffère de la figure 7 en ce que le deuxième plateau 38 est dans sa deuxième position de maintien du système de cran d'arrêt en mise sous tension du ressort 74. Dans cette deuxième position où le deuxième plateau 38 est maintenu vers la droite dans le plan des figures 7 et 8 par insertion des doigts 96 et 98 dans les fentes 88 et 90, la première extrémité 22A de l'organe de traction est placée à l'extrémité proximale du trou traversant oblong 16, le bras de levier 18 est redressé et les mâchoires de serrage 12, 20 sont desserrées. Dans cette deuxième position également, l'axe longitudinal D se situe dans l'espace libéré entre les deux mâchoires de serrage 12 et 20 pour l'insertion du câble 34 comme détaillé précédemment. Par l'effet de coin précité, la base 66 du deuxième plateau 38 est en outre angulairement redressée par rapport à la base 60 du premier plateau 32.

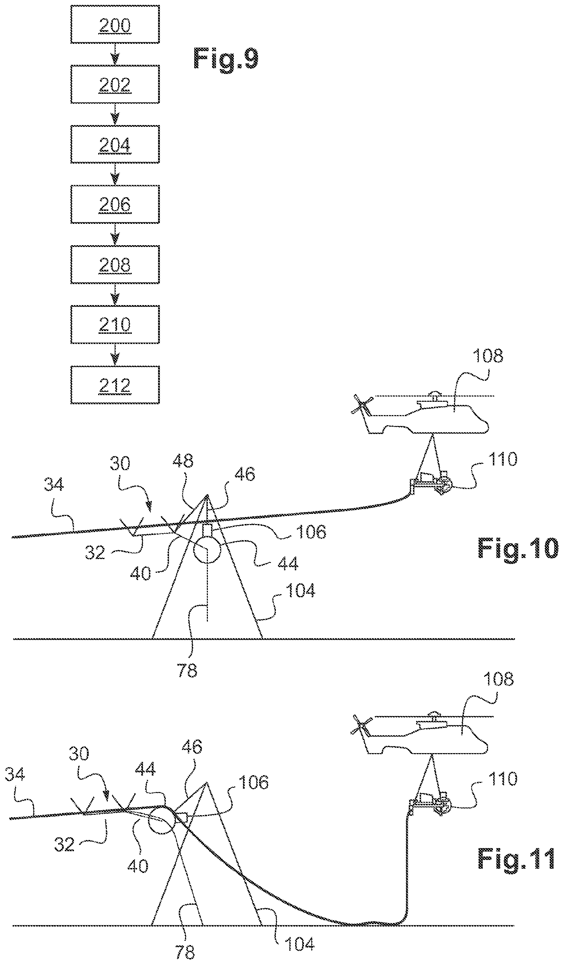

Un procédé global d'installation et de blocage en tension d'un câble sur une structure munie d'une poulie de déroulage va maintenant être décrit en référence aux figures 9 à 11.

Au cours d'une première étape 200, la poulie de déroulage 44 est installée sur le bras de balancier 46 lui-même suspendu à un pylône 104 d'un réseau de transport d'électricité à haute tension par câble. La poulie 44 est avantageusement munie d'un indicateur lumineux 106, par exemple un gyrophare, qui s'allume automatiquement lorsque le système de cran d'arrêt du dispositif de blocage 30 se libère pour indiquer le blocage en tension effectif du câble 34.

Au cours d'une étape suivante 202, le premier plateau 32 du dispositif de blocage 30 est fixé, comme indiqué sur la figure 3, libre en rotation autour de l'arbre 42 de rotation de la poulie de déroulage 44 à l'aide de la fourche 40. Il est maintenu dans une position d'équilibre par le brin élastique 48. Avantageusement, le brin élastique 48 est configuré en dimension et élasticité pour maintenir le premier plateau 32 en position proche de l'horizontalité et légèrement au-dessus de la partie supérieure de la poulie de déroulage 44.

Au cours d'une étape 204, on enclenche le système de cran d'arrêt du dispositif de blocage 30 en disposant le deuxième plateau 38 dans sa deuxième position par rapport au premier plateau 32 selon laquelle les mâchoires 12 et 20 de la pince serre-câble 10 sont desserrées. Comme vu précédemment, le maintien du cran d'arrêt est assuré par insertion des doigts 96 et 98 dans les fentes 88 et 90. Au cours de cette même étape par exemple, on installe la cordelette de libération 78 en la fixant à l'anneau 76 de la base 66 du deuxième plateau 38. En variante, il est évidemment tout à fait possible, et même probablement avantageux, d'installer la cordelette 78 bien avant, notamment avant les étapes 200 et 202.

Au cours d'une étape suivante 206, un hélicoptère 108 porteur d'une dérouleuse 110 du câble 34 s'approche de l'installation illustrée sur la figure 10, passe au-dessus en déroulant le câble 34 et approche ce dernier de la poulie de déroulage 44 en amorçant une légère descente et en s'aidant du bras de guidage 58. En ce faisant, il approche également le câble 34 du dispositif de blocage 30.

L'exécution des étapes 200 à 206 permet d'arriver à la situation de la figure 10.

Ensuite, lors d'une étape 208, l'hélicoptère 108 poursuit sa légère descente de manière à engager le câble 34 entre les éléments de guidage en « V » 62 et 64 du premier plateau 32, puis entre les éléments de guidage en « V » 80A, 80B et 82A, 82B du deuxième plateau 38 pour le diriger entre les mâchoires 12 et 20 desserrées de la pince serre-câble 10, puis en pression sur les têtes 92 et 94 des déclencheurs 84 et 86 qui pivotent pour sortir les doigts 96 et 98 des fentes 88 et 90.

Les deux doigts 96 et 98 se désengagent respectivement des deux fentes 88 et 90 au cours d'une étape 210 lorsque le câble 34 se place correctement entre les mâchoires 12 et 20 de la pince serre-câble 10. Le système de cran d'arrêt se libère alors, ce qui provoque le rappel du deuxième plateau 38 dans sa première position par rapport au premier plateau 32 et le resserrement des mâchoires 12 et 20 sur le câble 34 pour son blocage en tension. Avantageusement, le pivotement des déclencheurs 84 et 86 finit par libérer la pression du câble 34 sur les têtes 92 et 94 qui se redressent alors pour emprisonner le câble 34 entre les mâchoires 12 et 20. La reprise du câble 34 en tension par le dispositif de blocage 30 est alors effective et le gyrophare 106 s'allume. En continuant à tirer sur le câble 34 sans pour autant le dérouler davantage, la tension reprise par le dispositif de blocage 30 peut être encore augmentée. En effet, cette traction a pour effet de desserrer légèrement et temporairement les mâchoires 12 et 20 sans pour autant libérer le câble 34 qui reste prisonnier des têtes 92 et 94 des déclencheurs 84 et 86 redressés. Lorsque la tension augmente jusqu'à devenir trop contraignante pour le bras de balancier 46 supportant la poulie de déroulage 44, le mousqueton 50 du brin élastique 48 cède et s'ouvre, ce qui tend à disposer le dispositif de blocage 30, la poulie 44 et le bras de balancier 48 en linéarité pour une meilleure répartition des efforts. En variante, le gyrophare 106 pourrait ne s'allumer que sur ouverture du mousqueton 50.

Ensuite, au cours d'une étape 212 le pilote ou un copilote de l'hélicoptère 108 libéré de la tension du câble 34 déroule ce dernier pour le poser au sol.

L'exécution des étapes 208 à 212 permet d'arriver à la situation de la figure 11.

On notera qu'une fois l'opération de blocage de câble terminée grâce à sa reprise en tension par le dispositif de blocage 30, l'hélicoptère 108 peut libérer définitivement le câble 34 et s'éloigner, mettant ainsi fin à l'installation du câble. On notera également qu'il est avantageux de pouvoir débloquer simplement le câble 34, par exemple après fixation directe au sol ou sur le pylône 104 par un opérateur. C'est aisément réalisable grâce à la cordelette de libération 78. Il suffit en effet de tirer sur cette cordelette 78 depuis le sol pour placer le deuxième plateau 38 dans sa deuxième position d'enclenchement du système de cran d'arrêt et de libération du câble 34 par desserrement des mâchoires 12 et 20.

Il apparaît clairement qu'un dispositif de blocage tel que celui décrit précédemment permet le blocage en tension d'un câble déposé sur le dernier pylône d'une succession de pylônes sur lesquels doit être déroulé ce câble de façon automatique et sans aucune intervention humaine pendant la phase d'approche de l'hélicoptère. La cordelette 78 permet en outre de libérer aisément le dispositif de blocage pour permettre l'opération suivante de treuillage.

On notera par ailleurs que l'invention n'est pas limitée au mode de réalisation décrit précédemment. Il apparaîtra en effet à l'homme de l'art que diverses modifications peuvent être apportées au mode de réalisation décrit ci-dessus, à la lumière de l'enseignement qui vient de lui être divulgué.

## Revendications

1. Dispositif (30) de blocage en tension d'un câble (34), comportant une pince serre-câble (10) à mâchoires de serrage (12, 20) et à organe de traction (22), ladite pince (10) étant conçue pour que ses mâchoires (12, 20) soient actionnées en serrage par traction exercée sur une première extrémité (22A) de l'organe de traction (22) dont une deuxième extrémité (22B) est mécaniquement liée en déplacement à au moins l'une des mâchoires (12, 20), **caractérisé en ce qu'**il comporte :
- un premier plateau (32) de réception du câble (34),
- un deuxième plateau (38) de réception du câble (34) en liaison glissière avec le premier plateau (32), déplaçable entre une première position, maintenue par défaut à l'aide de moyens de rappel (74) entre les premier et deuxième plateaux (32, 38), et une deuxième position, maintenue par enclenchement d'un système de cran d'arrêt (84, 86, 88, 90, 92, 94, 96, 98) en mise sous tension des moyens de rappel (74),
et **en ce que** :
- au moins l'une des mâchoires (12, 20) de la pince serre-câble (10) est fixée à l'un des premier et deuxième plateaux (32, 38) tandis que la première extrémité (22A) de l'organe de traction (22) est fixée à l'autre des premier et deuxième plateaux (32, 38) pour une disposition en resserrement des mâchoires (12, 20) dans la première position du deuxième plateau (38) et une disposition en desserrement des mâchoires (12, 20) dans la deuxième position du deuxième plateau (38), et
- le système de cran d'arrêt (84, 86, 88, 90, 92, 94, 96, 98) est configuré pour être libéré par engagement du câble (34) entre les mâchoires (12, 20) desserrées de la pince serre-câble (10).

2. Dispositif de blocage (30) selon la revendication 1, dans lequel le premier plateau (32) comporte au moins deux éléments en « V » (62, 64) de guidage du câble (34) vers un axe longitudinal (D) passant entre les deux mâchoires (12, 20) desserrées de la pince serre-câble (10).

3. Dispositif de blocage (30) selon la revendication 2, dans lequel le deuxième plateau (38) comporte au moins deux éléments en « V » (80A, 80B, 82A, 82B) de guidage du câble (34) jusqu'à son engagement entre les deux mâchoires (12, 20) desserrées de la pince serre-câble (10), les éléments de guidage en « V » (62, 64) du premier plateau (32) étant configurés pour guider le câble (34) au moins jusqu'à son engagement entre les éléments de guidage en « V » (80A, 80B, 82A, 82B) du deuxième plateau (38).

4. Dispositif de blocage (30) selon l'une quelconque des revendications 1 à 3, dans lequel le système de cran d'arrêt (84, 86, 88, 90, 92, 94, 96, 98) comporte au moins un déclencheur (84, 86) fixé par une liaison pivot au deuxième plateau (38) et présentant un doigt (96, 98) apte à s'étendre dans une fente (88, 90) aménagée dans le premier plateau (32), ce déclencheur (84, 86) étant apte à basculer, par pression du câble (34) lors de son engagement entre les mâchoires (12, 20) desserrées de la pince serre-câble (10), d'une position de maintien du cran d'arrêt lorsque son doigt (96, 98) s'étend dans la fente (88, 90) du premier plateau (32) à une position de libération du cran d'arrêt par sortie de son doigt (96, 98) de la fente (88, 90) du premier plateau (32).

5. Dispositif de blocage (30) selon la revendication 4, dans lequel la fente (88, 90) est aménagée dans un rail (36) du premier plateau (32), le deuxième plateau (38) étant monté en liaison glissière à l'aide de patins (68, 70) sur ce rail (36) et les moyens de rappel (74) étant fixés à une de leurs extrémités sur ce rail (36).

6. Dispositif de blocage (30) selon l'une quelconque des revendications 1 à 5, comportant une fourche (40) de fixation du premier plateau (32) à un support (46).

7. Dispositif de blocage (30) selon la revendication 6, comportant un brin élastique (48) fixé, à une première extrémité (48A), au premier plateau (32) ou à la fourche (40) et muni, à une deuxième extrémité (48B), d'un mousqueton (50) à ouverture automatique sous chargement destiné à être raccordé au support (46).

8. Dispositif de blocage (30) selon l'une quelconque des revendications 1 à 7, comportant une cordelette de libération (78) dont une extrémité est fixée au deuxième plateau (38) au lieu de fixation des moyens de rappel (74).

9. Dispositif de blocage (30) selon l'une quelconque des revendications 1 à 8, comportant en outre un indicateur lumineux (106) dont l'allumage est provoqué automatiquement suite à la libération du système de cran d'arrêt (84, 86, 88, 90, 92, 94, 96, 98).

10. Procédé de blocage en tension d'un câble (34) à l'aide d'un dispositif de blocage (30) selon l'une quelconque des revendications 1 à 8, comportant les étapes suivantes :
- enclenchement (204) du système de cran d'arrêt (84, 86, 88, 90, 92, 94, 96, 98) pour une mise en deuxième position du deuxième plateau (38),
- rapprochement (206, 208) du câble (34) vers les premier et deuxième plateaux (32, 38), jusqu'à engager (210) le câble (34) entre les mâchoires (12, 20) desserrées de la pince serre-câble (10), et
- libération (210) du système de cran d'arrêt (84, 86, 88, 90, 92, 94, 96, 98) par placement du câble (34) entre les mâchoires (12, 20) desserrées de la pince serre-câble (10), provoquant ainsi le resserrement des mâchoires (12, 20) sur le câble (34) et son blocage en tension.

11. Procédé de blocage selon la revendication 10, comportant les étapes suivantes :
- placement (200) d'une poulie de déroulage (44) de câble sur une structure porteuse (46),
- fixation du premier plateau (32) du dispositif de blocage (30) à la poulie (44) de déroulage de câble,
le rapprochement (206, 208) du câble (34) vers les premier et deuxième plateaux (32, 38), l'engagement (210) du câble (34) entre les mâchoires (12, 20) desserrées de la pince serre-câble (10) et la libération (210) du système de cran d'arrêt (84, 86, 88, 90, 92, 94, 96, 98) étant réalisés à l'aide d'un hélicoptère (108) porteur du câble (34) lors d'une opération de déroulage et de dépôt du câble (34) sur un réa de la poulie de déroulage (44).

## Patentansprüche

1. Vorrichtung (30) zum Greifen unter Spannung eines Kabels (34), aufweisend eine Spannungsentlastungskabelklemme (10) mit Spannbacken (12, 20) und mit Zugorgan (22), wobei die Klemme (10) eingerichtet ist, damit ihre Backen (12, 20) in Zugspannung betätigt werden, die auf ein erstes Ende (22A) des Zugorgans (22) ausgeübt wird, von dem ein zweites Ende (22B) mit mindestens einer der Backen (12, 20) mechanisch verlagernd verbunden ist, **dadurch gekennzeichnet, dass** sie aufweist:
- eine erste Empfangsplatte (32) des Kabels (34),
- eine zweite Empfangsplatte (38) des Kabels (34) in Gleitverbindung mit der ersten Platte (32), die zwischen einer ersten Position, die standardmäßig mit Hilfe von Rückstellmitteln (74) zwischen der ersten und zweiten Platte (32, 38) gehalten wird, und einer zweiten Position, die durch Einrasten eines Rastnasensystems (84, 86, 88, 90, 92, 94, 96, 98) bei Unterspannungsetzen der Rückstellmittel (74) gehalten wird, verlagerbar ist,
und dass:
- mindestens eine der Backen (12, 20) der Spannungsentlastungskabelklemme (10) an einer von der ersten und zweiten Platte (32, 38) befestigt ist, wohingegen das erste Ende (22A) des Zugorgans (22) an dem anderen von der ersten und zweiten Platte (32, 38) für eine Spannungsanordnung der Backen (12, 20) in der ersten Position der zweiten Platte (38) und einer Löseanordnung der Backen (12, 20) in der zweiten Position der zweiten Platte (38) befestigt ist, und
- das Rastnasensystem (84, 86, 88, 90, 92, 94, 96, 98) ausgelegt ist, um durch Einführen des Kabels (34) zwischen die gelösten Backen (12, 20) der Spannungsentlastungskabelklemme (10) freigegeben zu sein.

2. Greifvorrichtung (30) nach Anspruch 1, wobei die erste Platte (32) mindestens zwei "V"-Führungselemente (62, 64) des Kabels (34) zu einer Längsachse (D) aufweist, die zwischen den zwei gelösten Backen (12, 20) der Spannungsentlastungskabelklemme (10) verläuft.

3. Greifvorrichtung (30) nach Anspruch 2, wobei die zweite Platte (38) mindestens zwei "V"-Führungselemente (80A, 80B, 82A, 82B) des Kabels (34) bis zu seinem Einführen zwischen die zwei gelösten Backen (12, 20) der Spannungsentlastungskabelklemme (10) aufweist, wobei die "V"-Führungselemente (62, 64) der ersten Platte (32) ausgelegt sind, um das Kabel (34) mindestens bis zu seinem Einführen zwischen die "V"-Führungselemente (80A, 80B, 82A, 82B) der zweiten Platte (38) zu führen.

4. Greifvorrichtung (30) nach einem der Ansprüche 1 bis 3, wobei das Rastnasensystem (84, 86, 88, 90, 92, 94, 96, 98) mindestens einen Auslöser (84, 86) aufweist, der durch eine Drehzapfenverbindung an der zweiten Platte (38) befestigt ist und einen Finger (96, 98) aufweist, der imstande ist, sich in einen Schlitz (88, 90) zu erstrecken, der in der ersten Platte (32) ausgebildet ist, wobei dieser Auslöser (84, 86) imstande ist, durch Druck des Kabels (34) bei seinem Einführen zwischen die gelösten Backen (12, 20) der Spannungsentlastungskabelklemme (10) aus einer Halteposition der Rastnase, wenn sich ihr Finger (96, 98) im Schlitz (88, 90) der ersten Platte (32) erstreckt, in eine Freigabeposition der Rastnase durch Verlassen ihres Fingers (96, 98) des Schlitzes (88, 90) der ersten Platte (32) zu kippen.

5. Greifvorrichtung (30) nach Anspruch 4, wobei der Schlitz (88, 90) in einer Schiene (36) der ersten Platte (32) ausgebildet ist, wobei die zweite Platte (38) mit Hilfe von Füßen (68, 70) in Gleitverbindung auf dieser Schiene (36) angebracht ist und die Rückstellmittel (74) an einer ihrer Enden auf dieser Schiene (36) befestigt sind.

6. Greifvorrichtung (30) nach einem der Ansprüche 1 bis 5, aufweisend eine Befestigungsgabel (40) der ersten Platte (32) an einem Halter (46).

7. Greifvorrichtung (30) nach Anspruch 6, aufweisend ein elastisches Seil (48), das an einem ersten Ende (48A) an der ersten Platte (32) oder an der Gabel (40) befestigt ist und an einem zweiten Ende (48B) mit einem unter Belastung automatisch öffnenden Schnapphaken (50) ausgestattet ist, der bestimmt ist, am Halter (46) angeschlossen zu sein.

8. Greifvorrichtung (30) nach einem der Ansprüche 1 bis 7, aufweisend eine Freigabeschnur (78), von der ein Ende an der zweiten Platte (38) an der Befestigungsstelle der Rückstellmittel (74) befestigt ist.

9. Greifvorrichtung (30) nach einem der Ansprüche 1 bis 8, aufweisend ferner eine Leuchtanzeige (106), die infolge der Freigabe des Rastnasensystems (84, 86, 88, 90, 92, 94, 96, 98) automatisch zu leuchten beginnt.

10. Verfahren zum Greifen unter Spannung eines Kabels (34) mit Hilfe einer Greifvorrichtung (30) nach einem der Ansprüche 1 bis 8, aufweisend die folgenden Schritte:
- Auslösen (204) des Rastnasensystems (84, 86, 88, 90, 92, 94, 96, 98) für ein Versetzen der zweiten Platte (38) in zweite Position,
- Annähern (206, 208) des Kabels (34) an die erste und zweite Platte (32, 38) bis zum Einführen (210) des Kabels (34) zwischen die gelösten Backen (12, 20) der Spannungsentlastungskabelklemme (10), und
- Freigeben (210) des Rastnasensystems (84, 86, 88, 90, 92, 94, 96, 98) durch Platzieren des Kabels (34) zwischen den gelösten Backen (12, 20) der Spannungsentlastungskabelklemme (10), wodurch das Spannen der Backen (12, 20) auf dem Kabel (34) und sein Greifen unter Spannung bewirkt wird.

11. Greifverfahren nach Anspruch 10, aufweisend die folgenden Schritte:
- Platzieren (200) einer Kabelabwickelrolle (44) auf einer tragenden Struktur (46),
- Befestigen der ersten Platte (32) der Greifvorrichtung (30) an der Kabelabwickelrolle (44),
wobei die Annäherung (206, 208) des Kabels (34) an die erste und zweite Platte (32, 38), das Einführen (210) des Kabels (34) zwischen die gelösten Backen (12, 20) der Spannungsentlastungskabelklemme (10) und die Freigabe (210) des Rastnasensystems (84, 86, 88, 90, 92, 94, 96, 98) mit Hilfe eines Hubschraubers (108), der das Kabel (34) hält, bei einem Abwickel- und Ablegevorgang des Kabels (34) auf einer Treibscheibe der Abwickelrolle (44) durchgeführt werden.

## Claims

1. A device (30) for locking a cable (34) in tension, comprising a cable clamp (10) with clamping jaws (12, 20) and a traction member (22), wherein said clamp (10) is designed so that its jaws (12, 20) are actuated in clamping mode by traction exerted on a first end (22A) of the traction member (22), a second end (22B) of which is mechanically connected in displacement to at least one of the jaws (12, 20), **characterised in that** it comprises:
- a first plate (32) for receiving the cable (34),
- a second plate (38) for receiving the cable (34) in sliding connection with the first plate (32), movable between a first position, held by default by means of return means (74) between the first and second plates (32, 38), and a second position, held by engagement of a locking catch system (84, 86, 88, 90, 92, 94, 96, 98) when the return means (74) are in tension,
and **in that**:
- at least one of the jaws (12, 20) of the cable clamp (10) is attached to one of the first and second plates (32, 38) while the first end (22A) of the traction member (22) is attached to the other of the first and second plates (32, 38) for a tightening disposition of the jaws (12, 20) in the first position of the second plate (38) and a loosening disposition of the jaws (12, 20) in the second position of the second plate (38), and
- the locking catch system (84, 86, 88, 90, 92, 94, 96, 98) is configured to be released by engagement of the cable (34) between the loose jaws (12, 20) of the cable clamp (10).

2. The locking device (30) according to claim 1, wherein the first plate (32) comprises at least two V-shaped elements (62, 64) for guiding the cable (34) towards a longitudinal axis (D) passing between the two loose jaws (12, 20) of the cable clamp (10).

3. The locking device (30) according to claim 2, wherein the second plate (38) comprises at least two V-shaped elements (80A, 80B, 82A, 82B) for guiding the cable (34) until it engages between the two loose jaws (12, 20) of the cable clamp (10), the V-shaped guiding elements (62, 64) of the first plate (32) being configured to guide the cable (34) at least until it engages between the V-shaped guiding elements (80A, 80B, 82A, 82B) of the second plate (38).

4. The locking device (30) according to any one of claims 1 to 3, wherein the locking catch system (84, 86, 88, 90, 92, 94, 96, 98) comprises at least one trigger (84, 86) fixed by a pivot connection to the second plate (38) and having a finger (96, 98) capable of extending into a slot (88, 90) provided in the first plate (32), this trigger (84, 86) being capable of tilting, by pressure of the cable (34) when it engages between the loose jaws (12, 20) of the cable clamp (10), from a position in which it holds the locking catch when its finger (96, 98) extends into the slot (88, 90) of the first plate (32) to a position in which it releases the locking catch by its finger (96, 98) coming out of the slot (88, 90) of the first plate (32).

5. The locking device (30) according to claim 4, wherein the slot (88, 90) is provided in a rail (36) of the first plate (32), the second plate (38) being mounted in sliding connection by means of pads (68, 70) on this rail (36) and the return means (74) being fixed at one of their ends to this rail (36).

6. The locking device (30) according to any one of claims 1 to 5, comprising a fork (40) for fixing the first plate (32) to a support (46).

7. The locking device (30) according to claim 6, comprising an elastic strand (48) fixed, at a first end (48A), to the first plate (32) or to the fork (40) and provided, at a second end (48B), with a carabiner (50) which opens automatically under loading and which is intended to be connected to the support (46).

8. The locking device (30) according to any one of claims 1 to 7, comprising a release cord (78), one end of which is fixed to the second plate (38) at the fixing location of the return means (74).

9. The locking device (30) according to any one of claims 1 to 8, further comprising an indicator light (106) which is switched on automatically when the locking catch system (84, 86, 88, 90, 92, 94, 96, 98) is released.

10. A method for tension locking a cable (34) by means of a locking device (30) according to any one of claims 1 to 8, comprising the following steps:
- engaging (204) the locking catch system (84, 86, 88, 90, 92, 94, 96, 98) for positioning the second plate (38) in its second position,
- bringing (206, 208) the cable (34) closer to the first and second plates (32, 38), until the cable (34) is engaged (210) between the loose jaws (12, 20) of the cable clamp (10), and
- releasing (210) the locking catch system (84, 86, 88, 90, 92, 94, 96, 98) by placing the cable (34) between the loose jaws (12, 20) of the cable clamp (10), thereby causing the jaws (12, 20) to tighten on the cable (34) and lock it in tension.

11. The locking method according claim 10, comprising the following steps:
- placement (200) of a cable unwinding pulley (44) on a supporting structure (46),
- attachment of the first plate (32) of the locking device (30) to the cable unwinding pulley (44),
wherein bringing (206, 208) the cable (34) closer to the first and second plates (32, 38), placing (210) the cable (34) between the loose jaws (12, 20) of the cable clamp (10) and releasing (210) the locking catch system (84, 86, 88, 90, 92, 94, 96, 98) is carried out using a helicopter (108) carrying the cable (34) during an operation of unwinding and depositing the cable (34) on a sheave of the unwinding pulley (44).
